# EUROPÄISCHE PATENTSCHRIFT

(11) **EP 0 929 712 B1**
(45) Veröffentlichungstag und Bekanntmachung des Hinweises auf die Patenterteilung: **02.06.2004**
(21) Anmeldenummer: 97944830.5
(22) Anmeldetag: 05.09.1997
(51) Int. Cl.: D06N 7/00

(54) **GLASFASERGEWEBETAPETE**
GLASS FIBER FABRIC WALLPAPER
PAPIER PEINT EN NAPPE DE FIBRES DE VERRE

(30) Priorität: 01.10.1996 DE 19640624
(43) Veröffentlichungstag der Anmeldung: 21.07.1999
(73) Patentinhaber: Wendland, Niels, 37242 Bad Sooden-Allendorf (DE)
(72) Erfinder: Wendland, Niels, 37242 Bad Sooden-Allendorf (DE)
(74) Vertreter: Gesthuysen, von Rohr & Eggert
(86) Internationale Anmeldenummer: PCT/EP1997/004817
(87) Internationale Veröffentlichungsnummer: WO 1998/014655

(56) Entgegenhaltungen:
- EP-A- 0 609 603
- DE-A- 3 134 396
- DE-A- 3 741 194
- DE-A- 4 018 762
- DE-U- 844 330
- DE-U- 8 809 215
- DE-U- 29 509 371
- GB-A- 2 024 711
- GB-A- 2 117 271
- DATABASE WPI Section Ch, Week 9302 Derwent Publications Ltd., London, GB; Class A14, AN 93-012681 XP002052603 & JP 04 339 648 A (YOSHIDA S) , 26.November 1992
- DATABASE WPI Section Ch, Week 8928 Derwent Publications Ltd., London, GB; Class A84, AN 89-201887 XP002052604 & JP 01 139 252 A (FUJIWARA KAGAKU KK) , 31.Mai 1989
- DATABASE WPI Section Ch, Week 8922 Derwent Publications Ltd., London, GB; Class A18, AN 89-161417 XP002052605 & JP 01 103 435 A (SEKAICHO RUBBER KK) , 20.April 1989

## Beschreibung

Die Erfindung betrifft eine Glasfasergewebetapete.

Es sind Glasfasergewebetapeten bekannt, die auf der Rückseite mit einem als wässrige Dispersion aufgetragenen Kleber versehen sind. Das ermöglicht ein Vorhaften, wenn die Glasfasergewebetapete auf einem festen und trockenen Untergrund angebracht wird. Für eine endgültige Fixierung der Glasfasergewebetapete an der Wand ist jedoch eine spezielle Kleberfarbe erforderlich, die kurz nach dem Anbringen auf die von der Wand abgewandte Seite der Glasfasergewebetapete aufgetragen werden muß. Sonst würde sich die selbsthaftende Glasfasergewebetapete innerhalb kurzer Zeit wieder von der Wand ablösen.

Nachteilig bei dieser selbsthaftenden Glasfasergewebetapete ist, daß einerseits eine spezielle Kleberfarbe notwendig ist, so daß das Tapezieren und Streichen aufwendig und teuer ist. Andererseits ist eine besonders offene Struktur des Gewebes der Schicht der Glasfasergewebetapete notwendig, damit der Kleber die Glasfasergewebetapete durchdringen kann, um eine Befestigung der Glasfasergewebetapete an der Wand zu ermöglichen.

Aus der DD-A-133 692 ist eine Glasfasergewebetapete bekannt, die einseitig mit einer Klebstoffschicht versehen ist, die vor dem Anbringen der Glasfasergewebetapete auf der Wand befeuchtet werden muß, da der Klebstoff wasserlöslich und nur im feuchten Zustand klebefähig ist. Wie auch bei einer herkömmlichen Glasfasergewebetapete besteht der Nachteil, daß die Glasfasergewebetapete nach dem Ankleben erst austrocknen muß, bevor ein Anstreichen möglich ist.

Die deutsche Gebrauchsmusterschrift DE 81 24 330 U1 beschreibt eine Gewebebahn aus natürlichen oder synthetischen anorganischen Fasern, deren Kett- und Schußfäden allseitig mit einer Kunststoffappretur umhüllt sind und auf deren eine Seite eine selbsthaftende Kleberschicht auf Basis eines Dispersionshaftklebstoffes als kontinuierlicher Auftrag aufgebracht ist. Die Kunststoffappreturschicht und/oder die Kleberschicht können bakterizid und fungizid ausgerüstet sein. Zu diesem Zweck müssen die Kunststoffappretur sowie der Dispersionsklebstoff flächig bzw. kontinuierlich auf die Gewebebahn aufgebracht sein.

Die deutsche Offenlegungsschrift DE 37 41 194 A1 betrifft einen flächigen Belag zum trockenen Aufbringen auf einen wandartigen Untergrund, insbesondere eine Tapete zum Trockentapezieren auf Wänden, wobei die Tapete aus einem flächigen Trägerkörper, insbesondere Papier, besteht, auf den eine flächige Schicht eines Dispersionsklebstoffschaums in Form von mit Gas gefüllten Microballons oder Microkugeln als ein insel- bzw. linienartiges Muster aufgetragen ist, wobei nach Aufbringen der Tapete an die Wand und Andrücken an den Untergrund eine fast 100 %ige effektive kontinuierliche Klebefläche realisiert wird. Glasfasergewebetapeten sind nirgends erwähnt.

Der vorliegenden Erfindung liegt nun das technische Problem zugrunde, die bekannte Glasfasergewebetapete derart auszugestalten und weiterzubilden, daß ein Tapezieren effektiver und schneller durchführbar ist.

Das zuvor beschriebene Problem wird erfindungsgemäß durch eine Glasfasergewebetapete gemäß Anspruch 1 gelöst. Weitere, vorteilhafte Ausgestaltungen sind Gegenstand der Unteransprüche.

Diese sind kommerziell erhältlich und beispielsweise im Römpp Chemie-Lexikon, 9. Auflage, Georg Thieme Verlag, Stuttgart/New York, 1995, Seite 4037 beschrieben. Beispiele geeigneter Schmelzklebstoffe sind "Helmitherm® 42034" der Firma Forbo-Helmitin GmbH, Pirmasens, "Tivomelt® 9058/30", Tivomelt® 9041" und "Tivomelt® 9162" der Firma Tivoli Werke AG, Hamburg, sowie "Technomelt® Q 5304" der Firma Henkel KGaA, Düsseldorf. Die zähelastischen Haftschmelzklebstoffe zeichnen sich durch besonders lange Klebzeiten aus, enthalten keine gefährlichen Inhaltsstoffe und sind nicht selbstentzündlich. Sie können auch nachvernetzend sein. Der Dauerkleber wird mittels einer thermischen Behandlung einseitig auf das Glasfasergewebe aufgetragen und ist nach dem Erkalten dauerhaft klebefähig.

Der Auftrag des Klebers erfolgt in herkömmlicher Weise, z.B. durch Aufrakeln oder Auftrag des geschmolzenen Klebers mit Walzen, so daß der Kleber nur punktförmig an den erhabenen Stellen des Gewebes haftet. Der Auftragungsprozeß ist bezüglich Menge und Grad der Verflüssigung, insbesondere des Schmelzklebers so ausgelegt, daß kein Klebstoff das Glasfasergewebe durchdringt und die ggf. mit Farbe zu bestreichende Oberfläche der Glasfasergewebetapete verunreinigt. Dieses wird zusätzlich durch die Struktur des Glasfasergewebes unterstützt. Daher ist es auch möglich, die von der Wand abgewandte Oberfläche der Glasfasergewebetapete derart vorzubehandeln, daß nach dem Anbringen der Glasfasergewebetapete ein sofortiges Streichen ohne eine vorige Grundierung möglich ist. Auch diese Eigenschaft führt zu einer Beschleunigung und Vereinfachung des Tapezierens und Streichens.

Wie für Gasfasergewebetapeten üblich, kann auch die erfindungsgemäße selbstklebende Glasfasergewebetapete in Rollen in den Verkehr gebracht werden, wobei erforderlichenfalls eine Verunreinigung der Oberseite bzw. ein Verkleben mit derselben durch eine vor Gebrauch leicht abziehbare Trennfolie, z.B. aus Polyethylen, oder durch ein Trennpapier auf der klebenden Unterseite der Tapete verhindert werden kann.

Im Gegensatz zu den bekannten selbsthaftenden Glasfasergewebetapeten ist die erfindungsgemäße Glasfasergewebetapete selbstklebend, d.h., daß sie ohne Verwendung eines zusätzlichen Klebstoffes an der Wand angebracht werden kann. Die unterbrochene Schicht aus thermoplastischem Dauerkleber bewirkt eine dauerhafte Fixierung, die sogar durch nachfolgendes zusätzliches Vernetzen eine immer stärkere Verbindung der Glasfasergewebetapete mit der Wand erzeugt.

Die selbstklebende Glasfasergewebetapete weist gegenüber den aus dem Stand der Technik bekannten selbsthaftenden Glasfasergewebetapeten eine Reihe von Vorteilen auf. Zunächst ist eine vorige Behandlung der Oberfläche der Wand nicht nötig, vorhandene Tapeten können, soweit sie selbst noch gut an der Wand haften, als Untergrund für die neue selbstklebende Glasfasergewebetapete dienen. Nach dem Anbringen der Glasfasergewebetapete ist ein sofortiges Streichen der raumzugewandten Seite möglich, da kein Abtrocknen des Dauerklebers abgewartet werden muß. Somit entfällt der Aufwand des Aufbringens eines Klebstoffes auf der Unterseite der Glasfasergewebetapete und zwischen dem Anbringen und dem Streichen der Glasfasergewebetapete tritt keine Zeitverzögerung ein.
Ein Entfernen von der Wand ist einfach möglich, weil die Affinität des Klebers zur Tapete höher ist als zum Untergrund.

## Patentansprüche

1. Selbstklebende Glasfasergewebetapete bestehend aus einem flächigen Glasfasergewebe, wobei das Glasfasergewebe einseitig mit einer Schicht eines Dauerklebers versehen ist,
**dadurch gekennzeichnet,**
**daß** der Dauerkleber ein wasserunlöslicher thermoplastischer Dauerkleber auf Basis eines Haftschmelzklebers oder Schmelzklebstoffes ist, wobei der Dauerkleber als unterbrochene Schicht nur punktförmig auf die erhabenen Stellen des Gewebes aufgebracht ist und die Menge sowie der Grad der Verflüssigung des Dauerklebers derart ausgelegt sind, daß das Glasfasergewebe von dem Dauerkleber nicht durchdrungen ist.

2. Glasfasergewebetapete nach Anspruch 1, **gekennzeichnet durch** eine abziehbare Trennfolie oder ein abziehbares Trennpapier auf der Klebstoffschicht.

3. Glasfasergewebetapete nach Anspruch 1 oder 2, **dadurch gekennzeichnet, daß** die Glasfasergewebetapete auf der von der mit dem Dauerkleber versehenen Seite abgewandten Seite derart vorbehandelt ist, daß ein Bestreichen der vorbehandelten Seite mit Farbe ohne vorige Grundierung möglich ist.

4. Glasfasergewebetapete nach einem der Ansprüche 1 bis 3, **dadurch gekennzeichnet, daß** die Glasfasergewebetapete zu einer Rolle aufgewickelt ist.

## Claims

1. A self-adhesive glass-fiber fabric wallpaper consisting of a flat-shaped glass-fiber fabric, wherein one side of said glass-fiber fabric is provided with a layer of a permanent adhesive,
**characterized in**
**that** said permanent adhesive is a water-insoluble thermoplastic permanent adhesive on the basis of a pressure-sensitive or hot-melt adhesive, wherein said permanent adhesive is applied in a only punctiform manner as an interrupted layer on the raised locations of said fabric, and
**that** the degree of liquefaction and the quantity of said permanent adhesive are designed or selected such that said glass-fiber fabric is not penetrated by said permanent adhesive.

2. The glass-fiber fabric wallpaper according to Claim 1, **characterized in that** a removable or strippable antiadhesive foil (film) or a removable or strippable release paper is arranged on the adhesive layer.

3. The glass-fiber fabric wallpaper according to Claim 1 or 2, **characterized in that** said glass-fiber fabric wallpaper is pretreated on the side facing away from the side provided with said permanent adhesive in such a way that the pretreated side can be painted without prior application of a primer.

4. The glass-fiber fabric wallpaper according to any of Claims 1 to 3, **characterized in that** said glass-fiber fabric wallpaper is wound up to a roll.

## Revendications

1. Papier peint en tissu de fibres de verre, constitué d'un tissu de fibres de verre en nappe, le tissu de fibres de verre étant muni sur une face d'une couche d'une colle permanente,
**caractérisé en ce**
**que** ladite colle permanente est une colle permanente thermoplastique insoluble dans l'eau, sur base d'une colle de contact fusible ou d'une colle fusible, ladite colle permanente étant appliquée sous forme d'une couche discontinue, seulement par points sur les parties en relief du tissu, et
**que** la quantité ainsi que le degré de liquéfaction de ladite colle permanente sont conçus de façon à ce que le tissu de fibres de verre ne soit pas pénétré par ladite colle permanente.

2. Papier peint en tissu de fibres de verre selon la revendication 1, **caractérisé par** un film pelliculable de séparation ou par un papier pelliculable de séparation sur la couche de colle.

3. Papier peint en tissu de fibres de verre selon l'une quelconque des revendications 1 ou 2, **caractérisé en ce que** sur sa face opposée à la face munie de colle permanente, ledit papier peint en tissu de fibres de verre est soumis à un prétraitement tel, qu'il est possible de peindre la face prétraitée sans apprêt préalable.

4. Papier peint en tissu de fibres de verre selon l'une quelconque des revendications 1 à 3, **caractérisé en ce que** ledit papier peint en tissu de fibres de verre est enroulé en un rouleau.
